Europäisches Patentamt

European Patent Office

Office européen des brevets

(19)

(11) Publication number: **0 402 745 A1**

## (12) EUROPEAN PATENT APPLICATION

(21) Application number: **90110652.6**

(22) Date of filing: **06.06.90**

(51) Int. Cl.5: **C08F 214/00, C08F 214/06, C09D 127/06, //(C08F214/06, 210:02,226:06)**

(30) Priority: **12.06.89 US 366049**

(43) Date of publication of application:
**19.12.90 Bulletin 90/51**

(84) Designated Contracting States:
**AT BE DE DK ES FR GB IT NL SE**

(71) Applicant: **PPG INDUSTRIES, INC.**
**One PPG Place**
**Pittsburgh Pennsylvania 15272(US)**

(72) Inventor: **Puskas, Joseph Emil**
**103 Audrey Lane**
**Cabot, Pa 16023(US)**
Inventor: **Spaulding, Melanie Sue**
**721, 12th Street**
**Pittsburgh, Pa 15139(US)**
Inventor: **Hart, Terence Joseph**
**1816 Gallo Drive**
**Powell, Ohio 43065(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) **Vinyl chloride latex composition having improved stability and durability properties.**

(57) Disclosed herein is an improved vinyl chloride latex composition characterized in that it contains a small but effective amount of triallyl cyanurate to provide improved stability and performance properties.

EP 0 402 745 A1

# VINYL CHLORIDE LATEX COMPOSITION HAVING IMPROVED STABILITY AND DURABILITY PROPERTIES

## Background of the Invention

Field of the Invention: The present invention relates to vinyl chloride latex copolymers. More specifically, the present invention relates to vinyl chloride latex copolymers which are stable and durable and are particularly useful in coating compositions.

## Brief Description of the Prior Art

Vinyl chloride latex copolymers are generally known in the art. These copolymers are advantaged by color clarity, flexibility, and barrier properties. These properties make the vinyl chloride latex copolymers well suited to use in plastics and surface coatings.

Of interest here is the need to improve the durability the vinyl chloride halide latex copolymers. Generally, durability of a latex copolymers can be improved by increasing the molecular weight thereof, and/or by copolymerizing therein monomers that are believed to impart durability properties to the copolymer. While theoretically possible, copolymerization of monomers that impart durability properties is limited by factors, such as monomer compatibility or monomer approval for use under local and national safety regulations.

By the present invention, there is provided a novel class of vinyl chloride latex copolymers containing small but effective amounts of a select group of monomers wherein stability and performance properties are improved.

## Summary of the Invention

In accordance with the foregoing, the present invention encompasses an improved vinyl halide latex composition containing a latex copolymer of free-radical addition polymerizable ethylenically unsaturated monomers in water in the presence of a polymeric surfactant; the improvement comprising a small but effective amount of a polyethylenically unsaturated monomer which is preferably a triallyl cyanurate.

In a preferred embodiment of the invention, the vinyl halide monomer is vinyl chloride and an alpha-olefin. The term "latex copolymer" is used to refer to the copolymerized monomers from an aqueous dispersed phase. The term "latex composition" is used to refer to the final composition comprising the latex copolymer and a polymeric surfactant. By the present invention, high temperature processing (at about 250° F) of the copolymer is improved.

The invention further encompasses a coating composition, particularly a water-based coating composition containing the vinyl halide latex composition of this invention. Also encompassed by the invention is an article of matter which is prepared by applying the coating composition of this invention to a substrate such as an aluminum substrate. The article of matter in this invention exhibits improvement in blush resistance, impact resistance, flexibility and acid resistance.

The invention as described more fully below is with specificity to triallyl cyanurate. However, other polyethylenically unsaturated monomers which are of the nature of triallyl cyanurate, in accordance with this invention, are also encompassed by the claimed invention.

## Detailed Description of the Invention

The vinyl halide latex copolymer of this invention is principally of a vinyl chloride and triallyl cyanurate content wherein the triallyl cyanurate is characterized in that it is present in small but effective amounts to the stability and performance properties of the latex composition. The triallyl cyanurate can be from about 0.1 to 2 percent or higher and preferably about 0.5 to 1 percent by weight solids based on the copolymerized monomer content of the latex copolymer. The vinyl halide content of the copolymer can be from about 75 to 99.4 percent and preferably from about 90 to 99 percent by weight solids based on the copolymerized monomer content of the latex copolymer. Another copolymerizable monomer that is typically employed herein can be an epoxy-containing monomer, an alpha-olefin or a mixture thereof.

An example of the epoxy-containing monomer can be glycidyl acrylate, glycidyl methacrylate, allyl glycidyl ether or the like. The epoxy-containing monomer can be employed in amounts of about 0.2 to 20 percent and preferably about 0.5 to 4 percent by weight solids based on the copolymerized monomer content of the latex copolymer.

An example of the alpha-olefin monomer can be ethylene, propylene, isobutylene, and butene-1. Ethylene is preferred. The alpha-olefin can be employed in a relatively low amount of about 1 to 6 and preferably about 1 to 4 percent by weight solids based on the copolymerized monomer content of the latex copolymer. Higher levels of the alpha-olefin, i.e., 20 percent or higher, can be employed as well.

It is a distinct feature of the invention that with a relatively low level of the alpha-olefin, a substantially high amount of the vinyl halide monomer can be employed herein. By using the high level of, say, vinyl chloride, the benefits associated with this monomer, e.g., barrier properties, can be maximized. Hence, the cost of the resultant copolymer can be reduced since the vinyl chloride monomer is relatively inexpensive.

In the process of this invention, the latex composition can be prepared by a free-radical initiated addition polymerization of the monomers described hereinabove in water in the presence of an emulsifier, consisting essentially of a polymeric surfactant such as a base-neutralized acid-functional addition polymer. The base-neutralized acid-functional acrylic polymer is prepared by free-radical addition polymerization of ethylenically unsaturated monomers at least one of which is an acid-functional monomer which is preferably an acrylic acid. Other acids useful herein can be methacrylic acid, itaconic acid, maleic acid, fumaric acid, monoesters of unsaturated dicarboxylic acids, e.g., methyl hydrogen maleate and ethyl hydrogen fumarate. Anhydrides can also be used. Other monomers can be copolymerized herein provided that the copolymerizable monomer does not adversely affect the preparation or use of the final product. The acid-functional monomer is employed in an amount of about 30 to 100 percent and preferably about 50 to 90 percent by weight based on the total monomer content of the acid-functional acrylic polymer. The molecular weight (Mw) of the acid-functional addition polymer can be from about 3,000 to 100,000 and preferably from about 10,000 to 80,000 based on polystyrene standards.

The acid-functional addition polymer is neutralized with a base, which is preferably a fugitive base. The degree of neutralization can be from about 0 to 100 and preferably about 30 to 80 percent. The useful bases are preferably a fugitive base. Suitable bases include ammonia and primary, secondary or tertiary amines, e.g., ethanolamine, diethanolamine, N-methylethanolamine, dimethylethanolamine, isopropanolamine, diisopropanolamine, methylamine, ethylamine, diethylamine, trimethylamine, triethylamine, and morpholine.

The latex composition can be prepared by free-radical initiated addition polymerization of the vinyl monomer and alpha-olefin in the presence of a surfactant. On a percent basis, the base-neutralized acid-functional polymeric surfactant can be employed in amounts of about 5 to 90 percent and preferably about 10 to 55 percent based on total resin solids of the latex composition. The polymeric surfactant can be used in combination with conventional surfactants such as ionic or nonionic surfactants. As aforestated, the vinyl monomer, the triallyl cyanurate, and the alpha-olefin monomer can be copolymerized with an epoxy-containing monomer. Yet, other copolymerizable monomers can be employed herein provided that the preparation or use of the latex copolymer is not adversely affected.

Thermal or redox free-radical initiators which can be used in the preparation of the latex copolymer can be water-soluble or oil-soluble initiators such as peroxide-types, e.g., hydrogen peroxide, t-butyl hydroperoxides/isoascorbic acid; ionic types, e.g., ammonium, sodium or potassium persulfates or azo types, e.g., azobisisovaleronitrile; azobis(N,N'dimethyleneisobutyl)amidene. Typically, there are employed in amounts of about 0.01 to 3 percent and preferably about 0.05 to 1 percent of the initiator based on the weight of the copolymerizable monomers.

The method of preparing the latex composition can be illustrated as follows. The polymerization temperatures employed can be from about 25°C to 90°C and preferably from about 40°C to 75°C. A reactor can be charged with about 10 to 20 weight percent of a mixture of a base-neutralized acid-functional polymeric surfactant, the triallyl cyanurate, vinyl chloride, optionally, glycidyl methacrylate, and water. Ethylene monomer in the required amount can be added to the reactor, preferably under pressure, to give the desired latex copolymer. The reaction mixture is then initiated by the addition of a free-radical initiator which can be an aqueous composition of ammonium persulfate. Polymerization is conducted until the rate of polymerization begins to decrease. The remaining monomer and surfactant mixture is added to the reactor charge, preferably at a uniform rate, until the reaction is no longer self-sustaining. The unreacted monomer is removed or reduced.

The resultant latex composition is stable and has a solids content of about 20 percent or higher and typically up to about 40 percent, particle size of 500 to 4,000 angstroms (determined by light transmission) and viscosity of about 10 to 10,000 centipoises at 30 revolutions per minute. The latex is of a molecular weight which is significantly higher than that of the same latex without the triallyl cyanurate. Illustratively, a latex prepared from vinyl chloride, glycidyl methacrylate, and ethylene would have a molecular weight of about 1 million. Triallyl cyanurate addition to the above monomers, at 1 percent based on total monomer content, results in a latex with a molecular weight of about 2 million or higher.

As aforestated, other polyethylenically unsaturated monomers having two more sites of unsaturation can be employed herein. Polyallyl monomers which are compatible with the vinyl halide monomer are hereby encompassed. Illustrative examples of the polyethylenically unsaturated monomers can be the vinyl esters of polybasic acids such as divinyl adipate, divinyl succinate, and divinyl itaconate; allyl esters of polyfunctional acids such as diallyl fumarate, and diallyl vinyl citrate; unsaturated ethers such as divinyl ethers and diallyl ethers.

In the practice of this invention, the latex composition can be employed in coating compositions in an amount sufficient for the intended use. In interior can coatings, for example, the latex composition should be present in an amount sufficient to provide barrier properties and other desirable fabrication and durability properties. The coating composition can contain curing agents such as aminoplasts, phenoplasts or isocyanates. The curing agent is employed in amounts sufficient to produce the requisite degree of crosslinking. The weight ratios of about 50 to 95:2 to 15 percent by weight of the latex to the curing agent can be employed.

Aminoplast resins are the condensation products of an aldehyde, e.g., formaldehyde, acetaldehyde, crotonaldehyde, and benzaldehyde with an amino or amide group-containing substance, e.g., urea, melamine, and benzoguanamine. Products obtained from the reaction of alcohols and formaldehyde with melamine, urea or benzoguanamine are preferred in the aqueous-based coating compositions because of their good water dispersibility. Useful alcohols used to make the etherified products are the monohydric alcohols, such as methanol, ethanol, propanol, butanol, hexanol, benzyl alcohol, cyclohexanol, and ethoxyethanol. An etherified melamine-formaldehyde resin is the preferred aminoplast resin. U.S. Patent 4,075,141, Porter et al, February 21, 1978, contains a description of useful aminoplast resins and is incorporated herein by reference.

Phenolic resins include the condensation product of an aldehyde with a phenol. Formaldehyde and acetaldehyde are preferred aldehydes. Various phenols can be used, e.g., phenol per se, cresol, p-phenylphenol, p-tert-butylphenol, p-tert-amylphenol, and cyclopentylphenol. The methylolphenol ethers described in U.S. Patent 2,597,333 (incorporated herein by reference) is especially useful.

A number of blocked polyisocyanates are satisfactory crosslinking agents. These agents are well known in the art. Generally, the organic polyisocyanates are blocked with a volatile alcohol, epsilon-caprolactam or ketoxime. These blocked polyisocyanates become unblocked at elevated temperatures, e.g., above about 100°C. "The Chemistry of Organic Film Formers", Robert E. Kreiger Pub. Co., copyrighted 1977, by D. H. Solomon, pages 216-217, contains a description of many blocked isocyanates that can be used here. The disclosure of this publication is herein incorporated by reference.

Also contained in the coating compositions can be additives such as flow control agents, adhesion promoters, cure catalysts and the like. The coating compositions of this invention can be prepared by blending the latex copolymer, the curing and other coating additives, and adjuncts thoroughly. The coatings can be cured by baking at temperatures of 300°F to 500°F to commercial quality coatings having color stability.

The coating composition can be applied to substrates such as aluminum or steel by spraying, roll coating, and electrodeposition methods. The article of matter comprising the cured coated substrates are characterized by good properties principal among which are latex stability, color stability, barrier properties, adhesion, blush resistance, impact resistance, acid resistance, and flexibility.

These and other properties are more fully illustrated by the following non-limiting examples.

Example 1

This example illustrates the vinyl latex compositions of this invention and a method of preparing and using the same.

4

| Ingredients | Parts by Weight |
|---|---|
| **Emulsion Mixture** | |
| Polymeric surfactant[1] | 34 |
| Deionized water | 136 |
| Triallyl cyanurate (50% solution in butanol) | 1.3 |
| Glycidyl methacrylate | 1.04 |
| Vinyl chloride monomer | 48 |
| **Initial Reactor Charge** | |
| Deionized water | 36.7 |
| Polymeric surfactant | 6 |
| Triallyl cyanurate in butanol | .23 |
| Glycidyl methacrylate | .18 |
| Vinyl chloride monomer | 8.55 |
| **Ethylene Monomer (Pressurization)** | |
| Ethylene | 8 |
| **Initiator Charge** | |
| Deionized water | 5.5 |
| Ammonium persulfate | 0.37 |

(1) An acrylic copolymer comprising 65 percent acrylic acid; 35 percent styrene; neutralized with ammonium hydroxide.

The polymerization was conducted in a sealed reactor equipped with an agitator, a means for heating, cooling and a means for purging with an inert gas. The aqueous emulsion mixture was prepared by thoroughly blending the ingredients of the mixture. The initial charge was added to the reactor and subjected to a vacuum, while stirring at about 100 revolutions per minute (rpm). The reactor was then pressurized with ethylene, with stirring at room temperature over a pressure range of about 4 to 180 pounds per square inch, atmosphere (psia). The reactor charge was then heated to about 61°C and a pressure of about 285 psia was attained at that temperature. The initiator charge was then added to the reactor. The reaction temperature was held at 61°C for 20 minutes until the pressure began to drop. Then, the rest of the aqueous emulsion mixture was added to the reactor at a uniform rate over three hours and at 61°C. Stirring at the end of the first hour was at 132 rpm; at the end of the second hour and thereafter was at 165 rpm. Thereafter, the resultant mixture was held for three hours at 61°C and 365 psia.

The resultant mixture was vacuum stripped to a free vinyl chloride monomer content of 10 parts per million (ppm). Analysis: Percent solids was 23.4, pH was 729, viscosity was 330 centipoises, weight per gallon was 8.9, particle size was 1335 angstroms.

Curable coating composition of this invention were prepared with vinyl latex compositions described hereinabove, melamine formaldehyde resins as curing agents and other resinous adjuncts and additives typically found in internal can coatings. The coating compositions were applied with a No. 12 drawdown bar and baked at 400°F for four minutes. The cured coatings showed significantly reduced discoloration, blush, and impact resistance.

Example 2

This example further illustrates the latex composition of this invention and a method of preparing the same.

A properly equipped reactor was charged with water, ammonium persulfate, and subjected to three cycles of vacuum and nitrogen pressuring. A tank with a pre-emulsification of monomers (PMF) was also subjected to the same cycle after it had been charged with the polymeric surfactant, glycidyl methacrylate, triallyl cyanurate, and butanol mixture. Initial charges were then made to the reactor, 359 grams (g) of PMF;

and 87 g of vinyl chloride monomer. Initial rpms on the reactor were set at 275 rpm and the rpms on PMF tank were set at 200. The reactor was then pressured to 165 pounds per square inch, ground (psig) with ethylene. After charging the ethylene, the reactor was heated to 62° C and the batch was held at that temperature for 20 minutes. A sample of the reaction mixture was then removed from the reactor for inspection and batch solids determination. After the 20-minute period, the final additions of PMF and vinyl chloride feeds were made: 2035 grams of PMF solution were fed to the reactor at 407 grams per hour for five hours. Simultaneously, 494 grams of vinyl chloride were fed to the reactor at 99 grams per hour for five hours. After all the feeds were in, the reaction mixture was held at 62 ° C for two hours for complete reaction. During the run, the reactor rpms were increased to 375 rpms at the end of the first hour of feeds and to 475 rpms at the end of the second hour of feeds. The reactor rpms were maintained at that level throughout the rest of the run.

The latex was then cooled, stripped of residual monomer, and analyzed for particle size and percent solids. The latex particle size was 1800 angstroms and final batch solids was 21.3 percent. The resultant latex composition was stable.

While the illustrative embodiments of the invention have been described hereinabove, it will be understood that various modifications will be apparent to and can be made by those skilled in the art without departing from the scope or spirit of the invention. Accordingly, it is intended that claims directed to the invention be construed as encompassing all aspects of the invention which would be treated as equivalents by those skilled in the art to which the invention pertains.

## Claims

1. An improved vinyl halide latex composition containing a copolymer of free-radical addition polymerizable ethylenically unsaturated monomers in water in the presence of a polymeric surfactant, the improvement comprising a small but effective amount of a copolymerizable polyethylenically unsaturated monomer.

2. The vinyl halide latex composition of claim 1 wherein the polyethylenically unsaturated monomer is a polyallyl monomer.

3. The vinyl halide latex composition of claim 2 wherein the polyallyl monomer is triallyl cyanurate.

4. The vinyl halide latex composition of claim 1 wherein the triallyl cyanurate is present in an amount of about 0.1 to 2.0 percent based on the weight solids of the copolymerized monomer context of the latex copolymer.

5. The vinyl halide latex composition of claim 4 wherein the triallyl cyanurate is in an amount of about 0.5 to 1.0.

6. The vinyl halide latex composition of claim 1 wherein vinyl halide is vinyl chloride.

7. The vinyl halide latex composition of claim 1 wherein the vinyl halide monomer is in an amount of about 60 to 99.4 percent based on the weight of the monomers of the latex copolymer.

8. The vinyl halide latex composition of claim 7 wherein the amount is about 90 to 99.

9. The vinyl halide latex composition of claim 1 wherein the copolymer comprises an alpha-olefin.

10. The vinyl halide latex composition of claim 9 wherein the alpha-olefin is ethylene.

11. The vinyl halide latex composition of claim 10 wherein the copolymerized ethylene is in an amount of about 1 to 6 percent by weight solids of the copolymerized monomer content of the latex copolymer.

12. The vinyl halide latex composition of claim 1 wherein the copolymer comprises an epoxy-containing monomer.

13. The vinyl halide latex composition of claim 12 wherein the epoxy-containing monomer is in an amount of about 0.2 to 20 by weight based on the weight solids of the copolymerized monomer content of the copolymer.

14. The vinyl halide latex composition of claim 1 wherein the polymeric surfactant is a base-neutralized acid-functional acrylic polymer.

15. The vinyl halide latex composition of claim 14 wherein the base-neutralized acid-functional acrylic polymer is prepared by free-radical addition polymerization of ethylenically unsaturated monomers at least one of which is an acid-functional monomer.

16. The vinyl halide latex composition of claim 15 wherein the acid-functional acrylic monomer is acrylic acid.

17. The vinyl halide latex composition of claim 15 wherein the acid-functional monomer is in an amount of about 30 to 100 by weight based on the total monomer content of the acid-functional acrylic polymer.

18. The vinyl halide latex composition of claim 13 wherein the acid-functional monomer is in an amount of about 50 to 90 by weight based on the weight of the acid-functional polymer.

19. The vinyl halide latex composition of claim 1 wherein the polymeric surfactant is in an amount from about 5 to 90 percent by weight based on total solids of the latex composition.

20. The vinyl halide latex composition of claim 19 wherein the polymeric surfactant is in an amount of about 10 to 55 percent.

21. A coating composition containing the vinyl halide latex composition of claim 1.

22. An article of matter which is prepared by applying to a substrate a coating composition containing the vinyl halide latex composition of claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2608553 (R. WOLF)<br>* claims; examples 1-3 *<br>--- | 1-2,<br>21-22 | C08F214/00<br>C08F214/06<br>C09D127/06 |
| X | EP-A-0004795 (SUMITO BAKELITE COMPANY)<br>* examples; claims; page 8, lines 24-28 *<br>--- | 1-11 | //(C08F214/06,<br>C08F210:02,C08<br>F226:06) |
| X | GB-A-2030996 (SUMITOMO CHEMICAL COMPANY)<br>* claims; examples *<br>--- | 1-22 | |
| X | CHEMICAL ABSTRACTS, vol. 80, no. 8, 25 February 1974<br>Columbus, Ohio, USA<br>page 15; ref. no. 37647U<br>& IL-A-31519 (IMI) 30-07-1973<br>* abstract *<br>----- | 1-11 | |
| | | | **TECHNICAL FIELDS SEARCHED (Int. Cl.5)**<br><br>C08F<br>C08L<br>C09D |

The present search report has been drawn up for all claims

| Place of search | Date of completion of the search | Examiner |
|---|---|---|
| THE HAGUE | 12 SEPTEMBER 1990 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)